# EUROPÄISCHE PATENTSCHRIFT

(11) **EP 2 283 245 B1**
(45) Veröffentlichungstag und Bekanntmachung des Hinweises auf die Patenterteilung: **28.12.2011**
(21) Anmeldenummer: 09757227.5
(22) Anmeldetag: 28.05.2009
(51) Int. Cl.: F16D 3/62

(54) **ELASTISCHER GELENKKÖRPER**
ELASTIC JOINT BODY
CORPS ARTICULE ELASTIQUE

(30) Priorität: 05.06.2008 DE 102008026763
(43) Veröffentlichungstag der Anmeldung: 16.02.2011
(73) Patentinhaber: SGF Süddeutsche Gelenkscheibenfabrik GmbH & Co. KG, 84478 Waldkraiburg (DE)
(72) Erfinder: BRANDL, Marc, 84508 Burgkirchen (DE); GRUENWALD, Thomas, 84453 Mühldorf (DE); NINDEL, Wolfgang, 84453 Mühldorf (DE)
(74) Vertreter: Thum, Bernhard
(86) Internationale Anmeldenummer: PCT/EP2009/003832
(87) Internationale Veröffentlichungsnummer: WO 2009/146844

(56) Entgegenhaltungen:
- DE-A1- 3 734 089
- DE-C1- 3 942 432
- JP-A- 11 325 101
- JP-U- 55 001 067

## Beschreibung

Die vorliegende Erfindung betrifft einen elastischen Gelenkkörper für eine Wellenanordnung zum gelenkigen Verbinden zweier Wellenabschnitte mit einer Mehrzahl von Buchsen, die in Umfangsrichtung in vorbestimmten Winkelabständen bezüglich einer Mittelachse des Gelenkkörpers angeordnet sind, einer Mehrzahl von Schlingenpaketen, wobei jedes Schlingenpaket jeweils zwei benachbarte Buchsen umschlingt, und einer gummielastischen Ummantelung, in die die Schlingenpakete und die Buchsen zumindest teilweise eingebettet sind.

Derartige Gelenkkörper sind aus dem Stand der Technik bekannt und beispielsweise in der deutschen Offenlegungsschrift DE 37 34 089 A1 offenbart. Dieses Dokument beschreibt in der Beschreibungseinleitung einen elastischen Gelenkkörper, bei dem zur axialen Abstützung der Schlingenpakete in axialer Richtung Kragen aufgepresst sind. Die Kragen weisen ein L-förmiges Profil auf und werden durch das Aufpressen auf je ein Buchsenende axial unverschiebbar und drehfest mit der Buchse verbunden. Zwischen den einzelnen Schlingenpaketen, die die Buchsen umschlingen, sind zur axialen Führung der Schlingenpakete um die Buchsen herum Stützelemente angeordnet. Sowohl die L-förmigen Kragen als auch die Stützelemente werden während eines Vulkanisationsvorgangs mit einer Gummischicht ummantelt.

Im Betrieb des Gelenkkörpers kann es aufgrund von kardanischen Beanspruchungen bzw. Biegebeanspruchungen zu Rissen an der Oberfläche bzw. in der gummielastischen Ummantelung im Bereich einer umlaufenden Aussenkante der L-förmigen Kragen kommen.

Bei der Montage der Gelenkkörper mit derartigen Kragenelementen in einem Antriebsstrang eines Kraftfahrzeugs kann ferner das durch zur Verschraubung benötigte Drehmoment auf die Kragen übertragen werden, wodurch diese relativ zur angebundenen Gummimasse verdreht werden. Dadurch kann es ebenfalls zu Rissen an der Oberfläche der gummielastischen Ummantelung durch ihre Anbindung an die Kragen kommen. Derartige Risse in der gummielastischen Ummantelung, die im Betrieb oder bereits während der Montage entstehen können, wirken sich negativ auf Lebensdauer des Gelenkkörpers aus.

Neben den vorangehend beschriebenen Kragenelementen sind zur axialen Abstützung der Schlingenpakete eines elastischen Gelenkkörpers aus dem Stand der Technik auch Ringbleche bekannt, die mit den Buchsen vernietet werden. Bei diesen Ringblechen kann es dazu kommen, dass während des Herstellungsprozesses bzw. des Vulkanisationsvorgangs der Gummi auf die Ringbleche fließt und dort anhaftet. In dem Herstellungsprozess muss deshalb ein zeit- und kostenintensiver Putzvorgang eingeplant werden, um die Ringbleche wieder zu reinigen

Ferner gehen bei der Entwicklung derartiger Gelenkkörper die Bemühungen auch dahin, die Gelenkkörper im Hinblick auf die durch die stetig steigenden Motorleistungen zunehmenden mechanischen Belastungen auszulegen und deren Lebensdauer weiter zu erhöhen.

Es ist somit Aufgabe der vorliegenden Erfindung, einen elastischen Gelenkkörper der eingangs bezeichneten Art bereitzustellen, der bei gleicher Dimensionierung den gestiegenen Anforderungen an die Drehmomentübertragung gerecht wird und gleichzeitig eine Erhöhung der Lebensdauer möglich macht, sowie den Herstellungsprozess vereinfacht.

Diese Aufgabe wird durch einen elastischen Gelenkkörper der eingangs bezeichneten Art gelöst, bei dem an wenigstens einem Endbereich wenigstens einer der Buchsen zur axialen Abstützung eines angrenzenden Schlingenpakets ein um die Buchse umlaufender, zumindest teilweise in die gummielastische Ummantelung eingebetteter Bund vorgesehen ist, der im achsenthaltenden Schnitt betrachtet einen U-förmigen Querschnitt aufweist, wobei der Querschnitt mit zwei U-Längsschenkeln und einem U-Querschenkel ausgebildet ist, wobei der Bund mit einem U-Längsschenkel an der Buchse anliegt.

Durch die Verwendung eines U-förmigen Bundes bei dem erfindungsgemäßen elastischen Gelenkkörper können Rissbildungen vermieden werden, die sich ausgehend von der äußeren Kante der L-förmigen Kragen an der Oberfläche der gummielastischen Ummantelung bzw. in der gummielastischen Ummantelung bilden und sich negativ auf die Lebensdauer des Gelenkkörpers auswirken können. Die Rissbildung in der gummielastischen Ummantelung kann durch eine abschnittsweise Anbindung des Gummis an die U-förmigen Bund-Bauteile vermieden werden. Mit anderen Worten wird die gummielastische Ummantelung bevorzugt nur an den U-Querschenkel der U-förmigen Bundbauteile angebunden, wodurch die aufgrund von kardanischen Beanspruchungen und während der Montage entstehenden Risse vermieden werden können. Zudem wird der Herstellungsprozess durch den Wegfall von Putzvorgängen und Befestigungsvorgängen, wie z.B. Vernietung der Ringbleche, aufgrund der U-förmigen Bund-Bauteile erheblich verkürzt und weniger kostenintensiv.

Ein weiterer Vorteil einer Verwendung von U-förmigen Bundbauteilen gegenüber herkömmlichen axialen Abstützungen von Schlingenpaketen besteht darin, dass durch den zusätzlichen U-Längsschenkel das Bundbauteil weiter versteift wird. Dies bedeutet, dass bei einer Belastung der Bundbauteile im Betrieb der Gelenkscheibe, insbesondere durch Angreifen der auf Zug belasteten Schlingenpakete, aufgrund der erhöhten mechanischen Steifigkeit der U-förmigen Bundbauteile deren Lebensdauer und damit die gesamte Lebensdauer des Gelenkkörpers verbessert wird.

Eine Weiterbildung der Erfindung sieht vor, dass sich der U-förmige Querschnitt des Bundes in Achsrichtung auswärts öffnet.

Zur Vermeidung von Anlagerungen von Schmutz und zur besseren Abführung von Feuchtigkeit im Bereich der Buchsen bzw. des U-förmigen Bundes sieht eine Weiterbildung der Erfindung vor, dass der von der Buchse abgewandte U-Längsschenkel in einem vorbestimmten Winkel zur Achse der Buchse geneigt ist. In diesem Zusammenhang kann vorgesehen sein, dass der Winkel in einem Bereich von 2 bis 20°, vorzugsweise von 5-15° gewählt werden kann. Mit anderen Worten, können durch die Neigung des von der Buchse abgewandten U-Längsschenkels aufgrund der im Betrieb des Gelenkkörpers wirkenden Zentrifugalkräfte Schmutz und Feuchtigkeit von den Buchsen bzw. U-förmigen Bundbauteilen schnell und einfach abgeführt werden. Ein weiterer Vorteil der schrägen Ausbildung des von der Buchse abgewandten U-Längsschenkels besteht darin, dass durch den schrägen Verlauf verhindert wird, dass einzelne oder mehrere Schlingen eines Schlingenpakets bei der Herstellung des Gelenkkörpers über den Bund abrutschen können. Wird ein entsprechend schräg ausgebildetes U-förmiges Bundbauteil verwendet, so werden aufgrund der Schräge einzelne Schlingen eines Schlingenpakets daran gehindert, über den Bund abzurutschen, weil sie nicht entgegen ihrer Spannung die Schräge empor gleiten können.

Gemäß einer bevorzugten Ausführungsform der Erfindung kann der Bund als separates Bauteil ausgebildet und auf die Buchse aufgepresst oder aufgerastet werden. Ein Aufrasten empfiehlt sich insbesondere bei der Verwendung von U-förmigen Bundbauteilen aus Kunststoff, die auf eine entsprechende Buchse aufgerastet werden. Dies ist bereits aus dem Stand der Technik für L- förmige Bundbuchsen bekannt.

Zur Vereinfachung des Herstellungsprozesses sieht eine Weiterbildung der Erfindung vor, dass der an der Buchse anliegende U-Längsschenkel in axialer Richtung kürzer ausgebildet ist, als der von der Buchse abgewandte U-Längsschenkel. Während des Vulkanisationsvorgangs kann die Form auf den radial äußeren längeren Schenkel drücken und diesen elastisch in axialer Richtung eindrücken. Dadurch bilden die aneinander anliegenden Flächen von Form und U-förmigem Bund-Bauteil eine dichtende Anlage, so dass kein Gummi in Richtung der Buchse fließen kann. Zudem kann der Gummi bei der Vulkanisation an dem äußeren, längeren U-Längsschenkel abgeprägt werden. Mit anderen Worten, läuft der Gummi nicht wie bei herkömmlichen Ringblechen oder ähnlichen Elementen zur axialen Abstützung der Schlingenpakete auf diese Elemente. Dieser unerwünschte buchsennahe Gummiüberschuss muss erfindungsgemäß nicht mehr wie beim Stand der Technik durch aufwändige und zeitintensive Putzvorgänge entfernt werden, da bei dem erfindungsgemäßen Gelenkkörper mit U-förmigem Bund kein Gummi über den äußeren, längeren U-Längsschenkel in die U-Form des Bundes läuft. Ferner kann durch den äußeren, längeren U-Längsschenkel das genutzte Vulkanisationswerkzeug vereinfacht werden, da der U-Längsschenkel zur Vorzentrierung genutzt werden kann.

Zusätzlich zur vorangestellt beschriebenen Ausbildung des Bundes als separates Bauteil, das auf die Buchsen aufgepresst wird, kann gemäß einer bevorzugten Ausführungsform der Erfindung der Bund an einem Ende der Buchse integral angeformt sein, wobei der Endbereich der Buchse einen U-Längsschenkel bildet, der mit einem U-Querschenkel integral verbunden ist, welcher wiederum mit einem von der Buchse abgewandeten U-Längsschenkel integral verbunden ist. In diesem Zusammenhang bleibt zu erwähnen, dass an dem anderen Endabschnitt der Buchse ein Bund als separates Bauteil angebracht werden kann. Mit anderen Worten kann eine Buchse, die mit einem integral ausgebildeten Bund an ihrem einen Endbereich an ihrem anderen axialen Endbereich mit einem separaten Bund-Bauteil versehen werden, das auf diesen Endbereich aufgepresst wird. Die Buchsen mit integral ausgebildeten Bundbauteilen werden wechselweise mit den separaten Bundbauteilen an den beiden axialen Oberflächen der gummielastischen Ummantelung angebracht. Durch die Buchsen mit integralen Bundbauteilen kann der Herstellungsprozess weiter verkürzt werden, da an einem Endbereich einer Buchse der Aufpressvorgang für den Bund entfällt.

Vorangehend wurde bereits beschrieben, dass während des Vulkanisationsvorgangs der Gummi an dem äußeren, längeren U-Längsschenkel abgeprägt wird. Deshalb sieht eine Weiterbildung der Erfindung vor, dass die gummielastische Ummantelung den Bund im Bereich seines von der Buchse abgewandten U-Längsschenkels bis zu dessen axial äußeren Rand umgibt, wobei eine axial äußere Umfangsfläche des von der Buchse abgewandeten U-Längsschenkels mit der Oberfläche der elastischen Ummantelung im wesentlichen bündig abschließt. Durch diesen bündigen Abschluss bzw. durch das Eindrücken des Bundes in die gummielastische Ummantelung während der Vulkanisation, bildet der Bund gemäß einer Ausführungsform der Erfindung mit der gummielastischen Ummantelung eine nachgiebige Abdichtung, da der U-förmige Bund den flüssigen Gummi während der Vulkanisation verdrängt und der Bund sozusagen "einfedert".

Zur weiteren axialen Abstützung bzw. axialen Führung der um eine Buchse verlaufenden Schlingenpakete, sieht eine Weiterbildung der Erfindung vor, dass zwischen zwei jeweils an den Endabschnitten einer Buchse angeordneten Bund-Bauteilen zusätzlich Kragen oder Einlagescheiben zur axialen Abstützung einzelner dazwischen liegender Schlingenpakete vorgesehen sind. Diese zusätzlichen Einlagescheiben und Kragen verhindern unerwünschte Reibungswirkungen zwischen den Schlingenpaketen und stützen diese gerade im besonders stark beanspruchten Bereich um die Buchsen axial ab, wodurch die Lebensdauer und die Drehmomentaufnahme weiter erhöht werden kann.

Da der Gummi an dem von der Buchse abgewandten U-Längsschenkel nicht angebunden sein muss, kann erfindungsgemäß zur Vermeidung von Rissen in der gummielastischen Ummantelung an dem von der Buchse abgewandten U-Längsschenkel ein Quersteg vorgesehen sein. Mit diesem zusätzlichen Quersteg an dem von der Buchse abgewandten U-Längsschenkel, d.h. am Außenumfang des U-förmigen Bundes, kann die Gefahr eines Aufklaffens des unangebundenen gummielastischen Materials weiter reduziert oder vollständig unterbunden werden, wodurch ein Eindringen von Schmutz und Feuchtigkeit in den Gelenkkörper verhindert wird.

Gemäß einer weiteren Ausführungsform der Erfindung kann der von der Buchse abgewandte U-Längsschenkel von der gummielastischen Ummantelung umgeben sein. Mit anderen Worten ist der U-förmige Bund zumindest teilweise mit Gummi umspritzt. Das den von der Buchse abgewandten U-Längsschenkel umgebende gummielastische Material wird nicht an das Bund-Bauteil angebunden und kann sich deshalb je nach Belastungszustand des Gelenkkörpers bewegen, ohne die Gefahr einer Rissbildung. Bei Übergang in den Ruhezustand des Gelenkkörpers bewegt sich das gummielastische Material wieder in die Ausgangsposition zurück. Ferner verhindert hier das gummielastische Material, das den von der Buchse abgewandten U-Längsschenkel umgibt, das Eindringen von Schmutz und Wasser in den Gelenkkörper.

Hinsichtlich der Materialwahl für die Bund-Bauteile sind diese gemäß einer bevorzugten Ausführungsform aus Metall oder Kunststoff hergestellt.

Eine Weiterbildung der Erfindung sieht vor, dass die gummielastische Ummantelung zumindest abschnittsweise an den Bund angebunden ist. Durch die abschnittsweise Anbindung der Bund-Bauteile an die gummielastische Ummantelung kann die Abstützung der Schlingenpakete beeinflusst und vorteilhaft auf die Vermeidung von Rissbildungen eingewirkt werden.

Die Erfindung betrifft ferner eine Wellenanordnung mit einem erfindungsgemäßen Gelenkkörper.

Die Erfindung wird im Folgenden beispielhaft anhand der beiliegenden Figuren erläutert. Es stellen dar:
- Fig. 1: eine achsenthaltende Schnittansicht einer ersten Ausführungsform der Erfindung;
- Fig. 2a, 2b,2c, 2d, 2e: Querschnittsansichten eines Bundes mit verschiedenen Neigungswinkeln des von der Buchse abgewandten U-Längsschenkels;
- Fig. 3: eine achsenthaltende Schnittansicht einer zweiten Ausführungsform der Erfindung;
- Fig. 4: eine achsenthaltende Schnittansicht einer dritten Ausführungsform der Erfindung;
- Fig. 5: eine achsenthaltende Schnittansicht einer vierten Ausführungsform der Erfindung;
- Fig. 6: eine achsenthaltende Schnittansicht einer fünften Ausführungsform der Erfindung; und
- Fig. 7: eine aufgebrochene Schnittansicht einer sechsten Ausführungsform der Erfindung

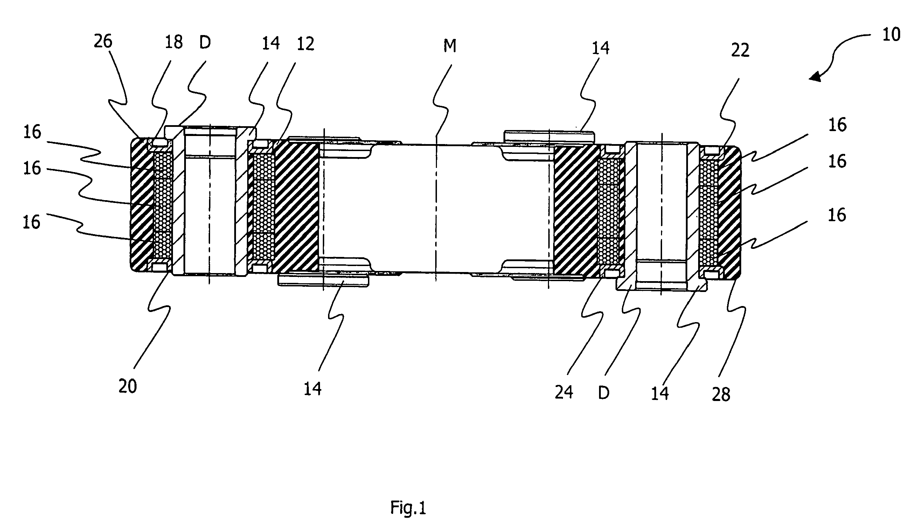

Fig. 1 zeigt eine Schnittansicht einer ersten Ausführungsform eines elastischen Gelenkkörpers 10 mit von einer gummielastischen Ummantelung 12 umgebenen Buchsen 14. An den Endbereichen der Buchsen 14 erkennt man die zur axialen Abstützung der Schlingenpakete 16 angeordneten Bund-Bauteile 18, 20, 22 und 24. Die U-förmigen Bund-Bauteile 18, 20, 22 und 24 sind derart angeordnet, dass sich ihr U-förmiger Querschnitt in Achsrichtung der Buchsen 14 nach außen öffnet.

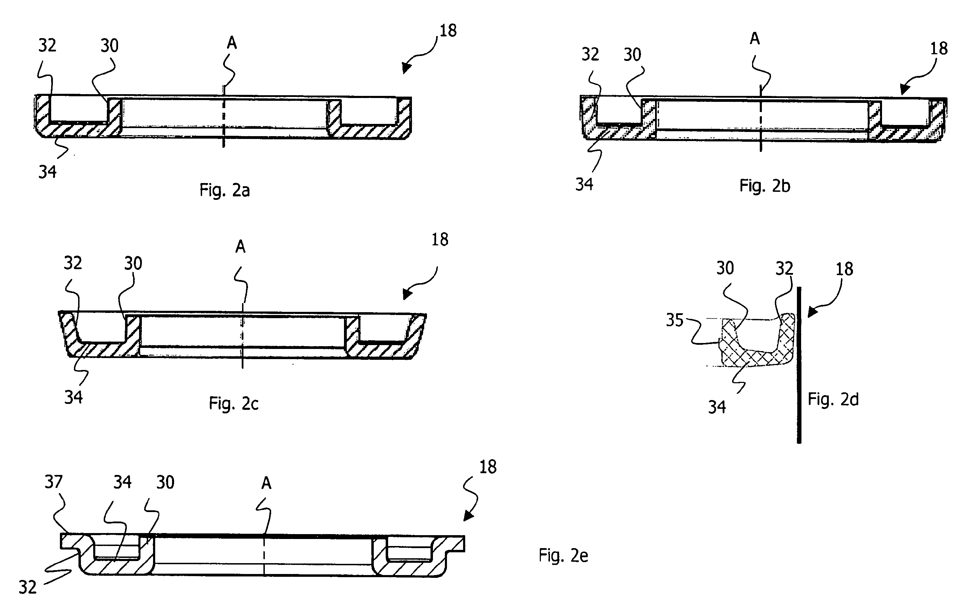

Auf die Geometrie der Bund-Bauteile 18, 20, 22 und 24 wird mit Bezug auf die Fig. 2a, 2b, 2c, 2d und 2e detailliert eingegangen.

Aus Fig. 1 erkennt man zudem, dass die U-förmigen Bund-Bauteile 18, 20, 22 und 24 bzw. der von der Buchse 14 abgewandte U-Längsschenkel im wesentlichen bündig mit den Oberflächen 26 und 28 der gummielastischen Ummantelung 12 abschließt, d. h. die U-förmigen Bundbauteile sind in die gummielastische Ummantelung eingebettet. Durch die U-förmigen Bund-Bauteile 18, 20, 22 und 24 werden Risse in der gummielastischen Ummantelung 12 aufgrund von kardanischen Beanspruchungen oder von während der Montage auf die Buchsen 14 übertragenen Drehmomenten vermieden, da im Gegensatz zum Stand der Technik die Bundbauteile 18, 20, 22 und 24 nicht vollständig an die gummielastische Ummantelung 12 angebunden werden bzw. vollständig ummantelt sind. Die gummielastischen Ummantelung 12 ist zur Vermeindung der Rissbildung bevorzugt nur an den U-Querschenkel der U-förmigen Bund-Bauteile 18, 20, 22 und 24 angebunden, wohingegen der von der Buchse 14 abgewandte U-Längsschenkel nicht an die gummielastische Ummantelung angebunden und die beim Stand der Technik von einer äußeren Kante der Kragen oder ähnlichen Elementen vermieden werden können

Durch die Vermeidung von Rissen in der gummielastischen Ummantelung 12 können die Bund-Bauteile 18, 20, 22 und 24 verglichen mit dem Stand der Technik eine geringere Höhe in axialer Richtung aufweisen können. Die Verringerung der Höhe in axialer Richtung der Bundbauteile 18, 20, 22 und 24 ermöglicht, dass die einzelnen Schlingenpakete 16 in axialer Richtung im Querschnitt vergrößert ausgelegt werden können. Im Querschnitt vergrößerte Schlingenpakete sind gleichbedeutend mit mehr Fadenwindungen an den einzelnen Schlingenpaketen 16, wodurch entsprechend die Kapazität zur Drehmomentaufnahme und gleichzeitig die Lebensdauer erhöht wird. Alternativ hierzu kann bei gleicher Drehmomentaufnahme der elastische Gelenkkörper 10 in axialer Richtung verkleinert werden, d. h. es kann Bauraum innerhalb einer Wellenanordnung, wie z. B. einem Antriebsstrang eines Fahrzeugs, eingespart werden.

Durch die U-Form der Bund-Bauteile 18, 20, 22 und 24 kann ferner der Herstellungsprozess des elastischen Gelenkkörpers 10 vereinfacht und kostenoptimiert werden. Im Herstellungsprozess bzw. des Vulkanisationsvorgangs wird die gummielastische Ummantelung an dem im Querschnitt äußeren U-Längsschenkel abgeprägt, d. h. es gelangt kein überschüssiger Gummi in die U-Form der Bund-Bauteile 18, 20, 22 und 24. Die U-förmigen Bund-Bauteile 18, 20, 22 und 24 müssen somit nicht mehr geputzt werden, was zu einer erheblichen Vereinfachung und Beschleunigung des Herstellungsprozesses führt. Damit einhergehend wird die bei der Herstellung benötigte Gummimenge reduziert, da der Gummiausschuss, der bei dem Stand der Technik anfällt, entfällt.

Aus Fig. 1 erkennt man zudem, dass die Buchsen 14 wechselweise, abhängig von ihrer Anbindung an (nicht gezeigte) Wellen einer Wellenanordnung bzw. ihrer Anbindung an die Antriebswelle oder Abtriebswelle, in axialer Richtung vor den U-förmigen Bund-Bauteilen an ihrem Ende einen Abschnitt D mit vergrößertem Querschnitt aufweisen. Dieser Abschnitt D dient dazu, bei der Verschraubung des elastischen Gelenkkörpers 10 ein möglicherweise auf die Buchse übertragenes Drehmoment nicht auf die Bund-Bauteile, in diesem Fall 18 und 24, zu übertragen, und auch dazu, die U-förmigen Bund-Bauteile 16 und 24 in axialer Richtung zusätzlich abzustützen.

Fig. 2a zeigt ein erstes Ausführungsbeispiel eines U-förmigen Bundes 18, mit inneren und äußeren U-Längsschenkeln 30 und 32 und sich zwischen diesen erstreckenden U-Querschenkeln 34. Der Bund 18 ist rotationssymmetrisch um seine Mittelachse A. Zudem erkennt man aus Fig. 2a, dass der innere U-Längsschenkel 30 verglichen mit dem äußeren U-Längsschenkel 32 leicht verkürzt ausgebildet ist. Durch die längere Ausbildung des äußeren U-Längsschenkels 32 kann das im Herstellungsprozess verwendete Vulkanisationswerkzeug auf den längeren U-Längsschenkel 32 drücken und diesen leicht elastisch deformieren, so dass sich eine dichtende Anlage ergibt. Dadurch kann verhindert werden, dass der Gummi im Vulkanisationsvorgang zur Buchse fließt. Ferner kann durch diesen U-Längsschenkel 32 eine Vorzentrierung im Werkzeug erfolgen kann. Der Bund 18 bildet mit der gummielastischen Ummantelung eine nachgiebige Abdichtung, d. h. es fließt während des Vulkanisationsvorgangs kein Gummi zwischen die Bund-Bauteile 18, 20, 22 , 24 bzw. der Gummi wird durch diese Bund-Bauteile verdrängt (Fig.1). Somit werden die Schlingenpakete 16 direkt durch die Bund-Bauteile 18, 20, 22 , 24 abgestützt.

Fig. 2b zeigt ein weiteres Ausführungsbeispiel für einen U-förmigen Bund 18, bei dem der äußere U-Längsschenkel 32 nicht nur in axialer Richtung länger ausgebildet ist, sondern auch zur Achse A des U-förmigen Bundes 18 einen Winkel von 5° aufweist.

Fig. 2c zeigt ebenfalls den U-förmigen Bund 18, bei dem der Neigungswinkel des äußeren U-Längsschenkels 32 zur Achse A des U-förmigen Bundes 15° beträgt. Der Neigungswinkel kann allgemein in einem Bereich von 2 bis 20° gewählt werden, vorzugsweise in einem Bereich von 5 bis 15°. Der schräg verlaufende Schenkel 32 des U-förmigen Bundes hat den Vorteil einer verbesserten Schmutzabführung in Folge von im Betrieb wirksamen Zentrifugalkräften. Darüber hinaus verhindert er ein unerwünschtes Abgleiten einzelner Fäden eines Schlingenpakets, weil diese aufgrund ihrer Spannung nicht an der Schräge empor gleiten können.

Fig. 2d zeigt eine geschnittene Teilansicht einer weiteren Ausführungsform eines U-förmigen Bunds gemäß der Erfindung. Diese Ausführungsform ist ähnlich der Ausführungsform gemäß Figur 2d, jedoch aus Kunststoff ausgebildet. Sie ist über eine Rastnase 35, die an der radial inneren Oberfläche des Schenkels 30 angeordnet ist, auf eine mit einer entsprechenden Ausnehmung ausgebildete Buchse aufrastbar, wie dies aus dem Stand der Technik an sich bekannt ist.

Bei den Ausführungsbeispielen für den Bund 18 gemäß der Figuren 2b und 2c können durch die Neigung des äußeren U-Längsschenkels 32 Schmutz und Feuchtigkeit aufgrund der im Betrieb einer Wellenanordnung wie z.B. dem Antriebsstrang eines Fahrzeugs wirkenden Zentrifugalkräfte schnell aus dem Bereich der Buchsen bzw. des U-förmigen Bundes 18 abgeführt werden. Der sich negativ auf die Lebensdauer auswirkende Einfluss von Verschmutzungen bzw. von Feuchtigkeit kann somit weitestgehend unterbunden werden.

Fig. 2e zeigt ebenfalls den U-förmigen Bund 18, bei dem an dem von der Buchse 14 abgewandten U-Längsschenkel 32 ein weiterer sich von diesem Schenkel 32 erstreckender Quersteg 37 vorgesehen ist. Da die gummielastische Ummantelung 12 an dem Längsschenkel 32 nicht angebunden sein muss, d.h. bei Nicht-Anbindung sich im Betrieb von diesem Schenkel 32 entfernen kann, kann durch den Quersteg 37 ein sehr weites Aufklaffen der gummielastischen Ummantelung in dem Bereich um den U-förmigen Längsschenkel 37 reduziert oder vollständig unterbunden werden.

Im Folgenden werden mit Bezug auf die weiteren Figuren weitere Ausführungsbeispiele der Erfindung erläutert. Zur Vermeidung von Wiederholungen und zur Vereinfachung der Beschreibung werden für gleichwirkende oder gleichartige Komponenten dieselben Bezugszeichen verwendet, wie im ersten Ausführungsbeispiel, jedoch mit einer fortlaufenden Ziffer vorangestellt.

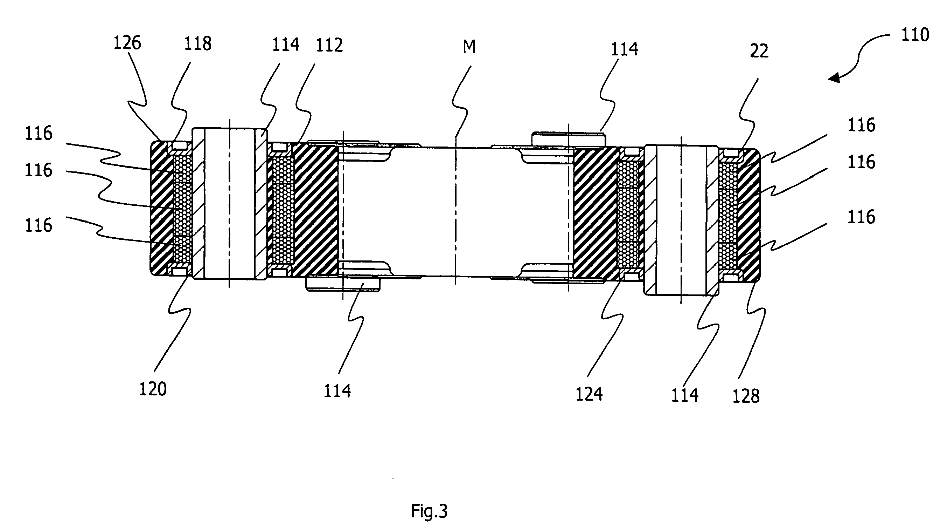

Fig. 3 zeigt eine Schnittansicht einer zweiten Ausführungsform der Erfindung, die sich lediglich von der ersten Ausführungsform gemäß Fig. 1 dadurch unterscheidet, dass die Buchsen 114 nicht wechselweise einen verdickten Endabschnitt D aufweisen und die Bund-Bauteile 118, 120, 122 und 124 direkt auf die Buchsen aufgepresst sind.

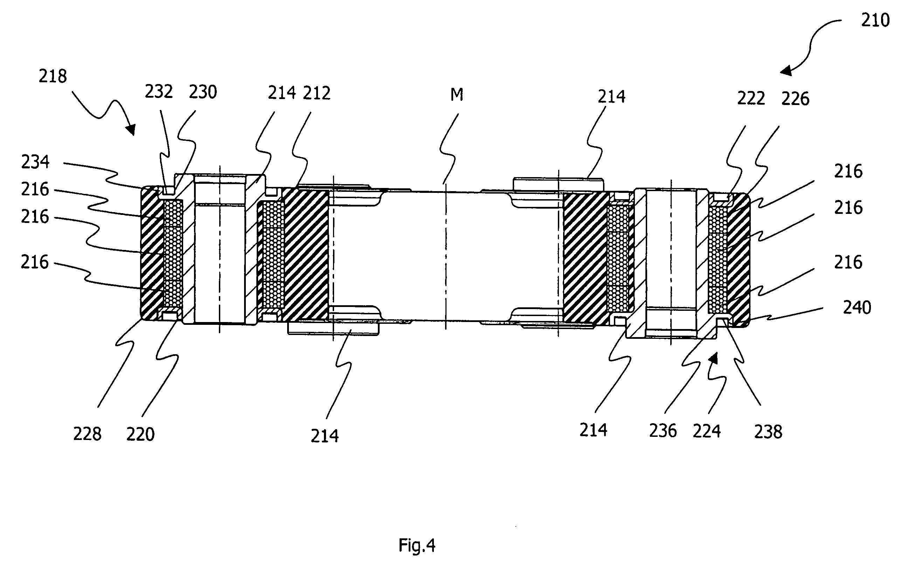

Fig. 4 zeigt eine achsenthaltende Schnittansicht einer dritten Ausführungsform der Erfindung, bei der an einem axialen Ende der Buchsen 214 ein Bund 218 bzw. 224 integral an den Buchsen 214 angeformt ist, wobei ein U-Längsschenkel 230 von dem Endbereich der Buchse 214 gebildet wird. Der U-Längsschenkel 230 ist integral mit dem U-Querschenkel 234 verbunden, der wiederum mit einem von der Buchse abgewandten U-Längsschenkel 232 integral verbunden ist. Gleiches gilt für den Bund 224 mit dem von der Buchse gebildeten U-Längsschenkel 236, der integral mit dem U-Längsschenkel 238 verbunden ist. Der U-Querschenkel 238 wiederum ist mit dem U-Längsschenkel 240 integral verbunden.

Zudem erkennt man aus Fig. 4, dass an dem von dem integral an der Buchse ausgebildeten Bund abgewandten axialen Ende der Buchse 214 ein separater Bund 220 aufgepresst ist, gleiches gilt für den Bund 222. Durch Anordnung von Buchsen 214 mit integralen Bundbauteilen 218 und 224 kann der Herstellungsprozess beschleunigt werden, da an einem Endbereich einer Buchse der Aufpressvorgang für eines der Bund-Bauteile entfällt.

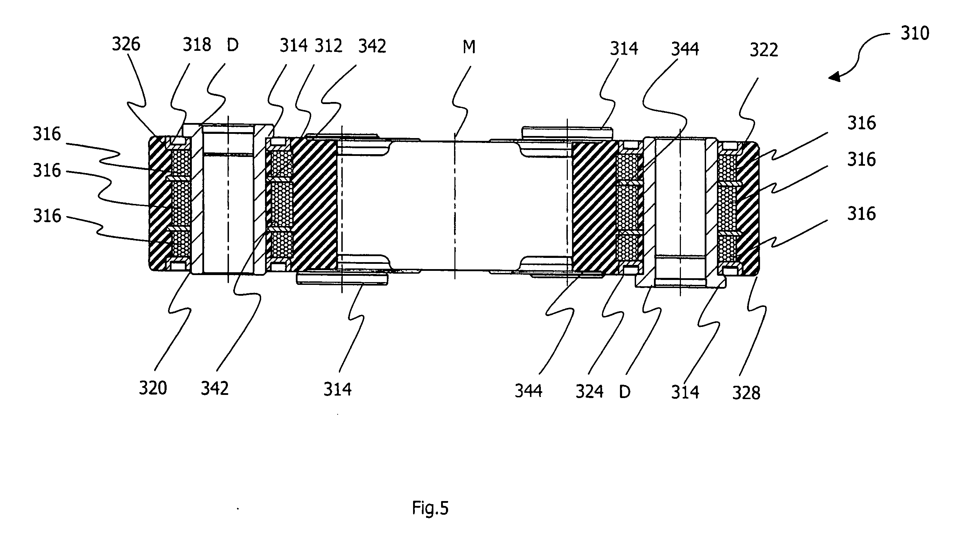

Fig. 5 zeigt eine vierte Ausführungsform der Erfindung, die sich von der ersten Ausführungsform der Erfindung gemäß Fig. 1 lediglich darin unterscheidet, dass zwischen den einzelnen Schlingenpaketen 316 Einlagescheiben 342 bzw. 344 angeordnet sind. Die Einlagescheiben 342 und 344 dienen zur zusätzlichen axialen Abstützung der einzelnen Schlingenpakete. Die Einlagescheiben 342 und 344 sind zur weiteren axialen Abstützung bzw. Führung der Schlingenpakete 316 im durch die kardanischen Beanspruchungen stark belasteten Bereich um die Buchsen 314 herum angeordnet. Zudem kann durch die Einlagescheiben 342 und 344 die Reibung der einzelnen Schlingenpakete 316 untereinander vermieden werden, d.h. Reibungswirkungen von gleichen Materialpaarungen aufeinander, die sich negativ auf die Lebensdauer des Gelenkköpers 310 auswirken können.

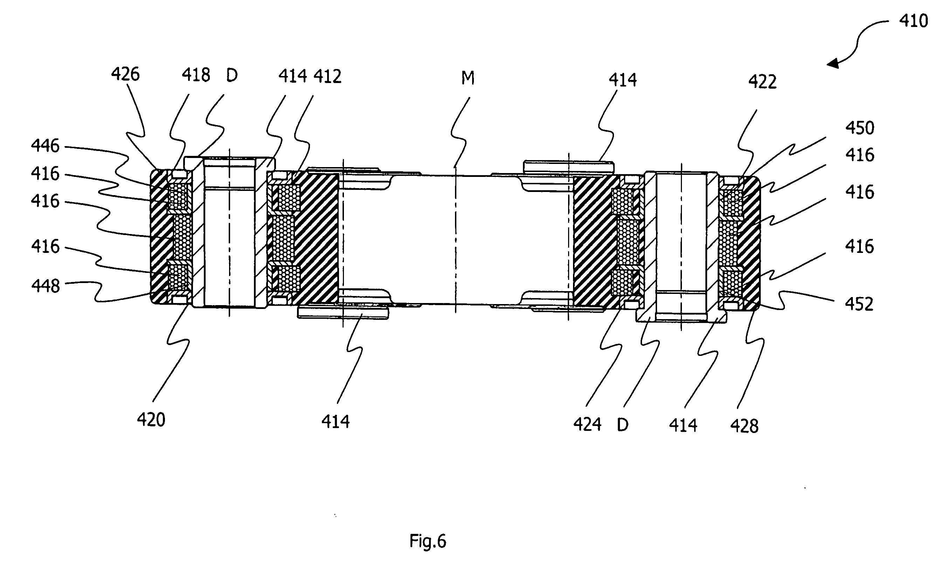

Fig. 6 zeigt eine fünfte Ausführungsform der Erfindung, bei der zur weiteren axialen Abstützung der Schlingenpakete L-förmige Kragenelemente 446, 448, 450 und 452 angeordnet sind. Die L-förmigen Kragenelemente 446, 448, 450 und 452 sind mit ihrem an den Buchsen 414 anliegenden Abschnitt in Richtung der Bund-Bauteile 418, 420, 422 und 424 bzw. in Richtung der Endabschnitte der Buchsen 414 angeordnet. Mit ihrem an den Buchsen anliegenden Abschnitt stützen sich die Kragen 446, 448, 450, 452 an den Bund-Bauteilen 418, 420, 422 und 424 ab und bilden somit mit den Bundkörpern bzw. zwischen ihnen Führungsbahnen zur axialen Führung und Abstützung der Schlingenpakete 416.

Für die Ausführungsform gemäß Fig. 6 gilt das mit Bezug auf Fig. 5 gesagte, dass die Kragen 446, 448, 450, 452 zur axialen Abstützung und zur Vermeindung von Reibungswirkungen zwischen den einzelnen Schlingenpaketen 416 angeordnet werden.

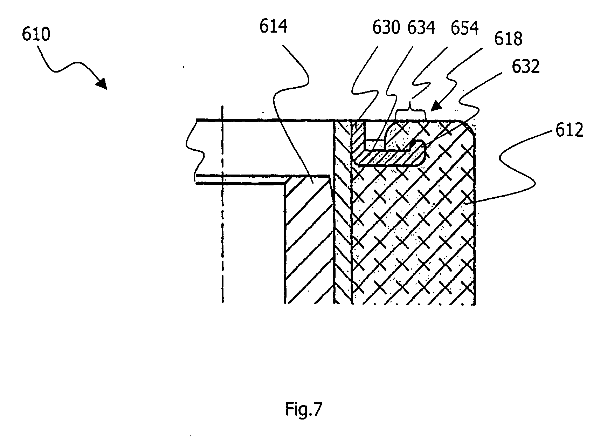

Fig. 7 zeigt eine sechste Ausführungsform der Erfindung, bei der der U-förmige Bund 618 in einem inneren Bereich 654 von der gummielastischen Ummantelung 612 teilweise umgeben ist. Wie man aus Fig. 7 erkennt, ist der von der Buchse 614 abgewandte U-Längsschenkel 632 gemäß dieser Ausführungsform der Erfindung verglichen mit dem an der Buchse 614 anliegenden Längsschenkel 630 verkürzt ausgebildet. Dementsprechend ist der Längsschenkel 632 vollständig von der gummielastischen Ummantelung 612 umgeben. Das gummielastische Material im Bereich 654 muss nicht an dem U-förmigen Bund 618 bzw. an dem U-Längsschenkel 632 angebunden sein und kann sich dann, wenn es nicht angebunden ist, im belasteten Zustand bewegen, ohne dass Risse in der gummielastischen Ummantelung 612 auftreten. Im unbelasteten Zustand, d.h. im Ruhezustand des Gelenkkörpers 610, bewegt sich das gummielastische Material 612 im Bereich 654 wieder zurück in seine Ausgangsposition. Der Längsschenkel 632 wirkt in dieser Ausführungsform der Erfindung zusammen mit dem gummielastischen Material 612 im Bereich 654 als Abdichtung gegen das Eindringen von Schmutz und Wasser. Abgesehen von der vorstehend beschriebenen Möglichkeit zur Abdichtung am äußeren U-Längsschenkel bei der Herstellung können bei dieser Ausführungsform alle Vorteile der vorstehend beschriebenen Ausführungsform erreicht werden.

## Patentansprüche

1. Elastischer Gelenkkörper (10) für eine Wellenanordnung zum gelenkigen Verbinden zweier Wellenabschnitte mit
- einer Mehrzahl von Buchsen (14), die in Umfangsrichtung in vorbestimmten Winkelabständen bezüglich einer Mittelachse (M) des Gelenkkörpers (10) angeordnet sind,
- einer Mehrzahl von Schlingenpaketen (16), wobei jedes Schlingenpaket (16) jeweils zwei benachbarte Buchsen (14) umschlingt, und
- einer gummielastischen Ummantelung (12), in die die Schlingenpakete (16) und die Buchsen (14) zumindest teilweise eingebettet sind, wobei
an wenigstens einem Endbereich wenigstens einer der Buchsen (14) zur axialen Abstützung eines angrenzenden Schlingenpakets (16) ein um die Buchse (14) umlaufender, zumindest teilweise in die gummielastische Ummantelung (12) eingebetteter Bund (18, 20, 22, 24; 218, 224) vorgesehen ist, der im achsenthaltenden Schnitt betrachtet einen U- förmigen Querschnitt aufweist, wobei der Querschnitt mit zwei U-Längsschenkeln (30, 32) und einem U- Querschenkel (34) ausgebildet ist, **dadurch gekennzeichnet, dass** der Bund mit einem U-Längsschenkel (30, 32) an der Buchse (14) anliegt.

2. Gelenkkörper (10) nach Anspruch 1,
**dadurch gekennzeichnet, dass** sich der U-förmige Querschnitt des Bunds (18, 20, 22, 24; 218, 224) in Achsrichtung auswärts öffnet.

3. Gelenkkörper (10) nach Anspruch 1 oder 2,
**dadurch gekennzeichnet, dass** der von der Buchse (14) abgewandte U-Längsschenkel (32) in einem vorbestimmten Winkel zur Achse der Buchse geneigt ist.

4. Gelenkkörper (10) nach Anspruch 3,
**dadurch gekennzeichnet, dass** der Winkel in einem Bereich von 2 bis 20°, vorzugsweise von 5 bis 15°, liegt.

5. Gelenkkörper (10) nach einem der vorangehenden Ansprüche,
**dadurch gekennzeichnet, dass** der Bund (18, 20, 22, 24) als separates Bauteil ausgebildet und auf die Buchse (14) aufgepresst oder aufgerastet ist.

6. Gelenkkörper (10) nach Anspruch 5,
**dadurch gekennzeichnet, dass** der an der Buchse (14) anliegende U-Längsschenkel (30) in axialer Richtung kürzer ausgebildet ist, als der von der Buchse (14) abgewandte U-Längsschenkel (32).

7. Gelenkkörper (210) nach einem der vorangehenden Ansprüche,
**dadurch gekennzeichnet, dass** an einem Ende der Buchse (214) ein Bund (218, 224) integral angeformt ist, wobei der Endbereich der Buchse (214) einen U-Längsschenkel (230, 236) bildet, der mit einem U-Querschenkel (232, 238) integral verbunden ist, welcher wiederum mit einem von der Buchse (214) abgewandten U-Längsschenkel (234, 240) integral verbunden ist.

8. Gelenkkörper (210) nach Anspruch 7,
**dadurch gekennzeichnet, dass** an dem anderen Endabschnitt der Buchse (214) ein Bund (220, 222) als separates Bauteil angebracht.

9. Gelenkkörper (10) nach einem der vorangehenden Ansprüche,
**dadurch gekennzeichnet, dass** die gummielastische Ummantelung (12) den Bund (18, 20, 22, 24) im Bereich seines von der Buchse (14) abgewandten U-Längsschenkels (32) bis zu dessen axial äußeren Rand umgibt, wobei eine axial äu-βere Umfangsfläche des von der Buchse (14) abgewandten U-Längsschenkels (32) mit der Oberfläche (26, 28) der elastischen Ummantelung (12) im wesentlichen bündig abschließt.

10. Gelenkkörper (10) nach einem der vorangehenden Ansprüche,
**dadurch gekennzeichnet, dass** der Bund (10, 20, 22, 24) mit der gummielastischen Ummantelung (12) eine nachgiebige Abdichtung bildet.

11. Gelenkkörper (310; 410) nach einem der vorangehenden Ansprüche,
**dadurch gekennzeichnet, dass** zwischen zwei jeweils an den Endabschnitten einer Buchse (214;410) angeordneten Bund-Bauteilen (318, 320, 322, 324; 418, 420, 422, 424) Kragen (446, 448, 450, 452) oder Einlagescheiben (342, 344) zur axialen Abstützung einzelner dazwischen liegender Schlingenpakete vorgesehen sind.

12. Gelenkkörper (10) nach einem der vorangehenden Ansprüche,
**dadurch gekennzeichnet, dass** an dem von der Buchse (14) abgewandten U-Längsschenkel (32) ein Quersteg (37) vorgesehen ist.

13. Gelenkkörper (610) nach einem der vorangehenden Ansprüche,
**dadurch gekennzeichnet, dass** der von der Buchse (614) abgewandte U-Längsschenkel (632) von der gummielastischen Ummantelung (612) umgeben ist.

14. Gelenkkörper (10) nach einem der vorangehenden Ansprüche,
**dadurch gekennzeichnet, dass** der Bund (18, 20, 22, 24) aus Metall oder Kunststoff hergestellt ist.

15. Gelenkkörper (10) nach einem der vorangehenden Ansprüche,
**dadurch gekennzeichnet, dass** die gummielastische Ummantelung (12) zumindest abschnittsweise an den Bund (18, 20, 22, 24) angebunden verbunden ist.

16. Wellenanordnung mit einem Gelenkkörper (10) nach einem der Ansprüche 1 bis 15.

## Claims

1. Elastic joint body (10) for a shaft arrangement for the articulated connection of two shaft sections, with
- a plurality of bushings (14) which are arranged in the circumferential direction at predetermined angular distances with respect to a centre axis (M) of the joint body (10),
- a plurality of loop bundles (16), each loop bundle (16) looping around in each case two adjacent bushings (14), and
- a rubber-elastic casing (12) in which the loop bundles (16) and the bushings (14) are at least partially embedded,
whereby a flange (18, 20, 22, 24; 218, 224) is provided at at least one end region of at least one of the bushings (14) for the axial support of an adjacent loop bundle (16), said flange encircling the bushing (14), being at least partially embedded in the rubber-elastic casing (12) and having a U-shaped cross-section, as viewed in the axis-containing section, the cross-section being designed with two U longitudinal limbs (30, 32) and one U transverse limb (34),
**characterised in that** the flange bears with a U longitudinal limb (30, 32) against the bushing (14).

2. Joint body (10) according to Claim 1,
**characterised in that** the U-shaped cross-section of the flange (18, 20, 22, 24; 218, 224) opens outwards in the axial direction.

3. Joint body (10) according to Claim 1 or 2,
**characterised in that** the U longitudinal limb (32) facing away from the bushing (14) is inclined at a predetermined angle with respect to the axis of the bushing.

4. Joint body (10) according to Claim 3,
**characterised in that** the angle is in a range from 2 to 20°, preferably from 5 to 15°.

5. Joint body (10) according to one of the preceding claims,
**characterised in that** the flange (18, 20, 22, 24) is designed as a separate component and is pressed or latched onto the bushing (14).

6. Joint body (10) according to Claim 5,
**characterised in that** the U longitudinal limb (30) bearing against the bushing (14) is designed shorter in the axial direction than the U longitudinal limb (32) facing away from the bushing (14).

7. Joint body (210) according to one of the preceding claims,
**characterised in that** a flange (218, 224) is integrally formed on at one end of the bushing (214), the end region of the bushing (214) forming a U longitudinal limb (230, 236) which is integrally connected to a U transverse limb (232, 238), which in turn is integrally connected to a U longitudinal limb (234, 240) facing away from the bushing (214).

8. Joint body (210) according to Claim 7,
**characterised in that** a flange (220, 222) is fitted as a separate component on the other end section of the bushing (214).

9. Joint body (10) according to one of the preceding claims,
**characterised in that** the rubber-elastic casing (12) surrounds the flange (18, 20, 22, 24) in the region of its U longitudinal limb (32) facing away from the bushing (14) as far as the axially outer edge of this limb, an axially outer circumferential surface of the U longitudinal limb (32) facing away from the bushing (14) terminating substantially flush with the surface (26, 28) of the elastic casing (12).

10. Joint body (10) according to one of the preceding claims,
**characterised in that** the flange (10, 20, 22, 24) forms a yielding seal with the rubber-elastic casing (12).

11. Joint body (310; 410) according to one of the preceding claims,
**characterised in that**, between two flange components (318, 320, 322, 324; 418, 420, 422, 424) arranged in each case at the end sections of a bushing (214; 410), collars (446, 448, 450, 452) or insert discs (342, 344) for the axial support of individual loop bundles located therebetween are provided.

12. Joint body (10) according to one of the preceding claims,
**characterised in that** a transverse web (37) is provided on the U longitudinal limb (32) facing away from the bushing (14).

13. Joint body (610) according to one of the preceding claims,
**characterised in that** the U longitudinal limb (632) facing away from the bushing (614) is surrounded by the rubber-elastic casing (612).

14. Joint body (10) according to one of the preceding claims,
**characterised in that** the flange (18, 20, 22, 24) is made of metal or plastic.

15. Joint body (10) according to one of the preceding claims,
**characterised in that** the rubber-elastic casing (12) is at least sectionally attached connected to the flange (18, 20, 22, 24).

16. Shaft arrangement having a joint body (10) according to one of Claims 1 to 15.

## Revendications

1. Corps articulé élastique (10) pour un agencement d'arbres pour la liaison articulée de deux segments d'arbre, comprenant
- une multiplicité de douilles (14) disposées dans la direction circonférentielle et à des distances angulaires prédéfinies par rapport à un axe médian (M) du corps articulé (10),
- une multiplicité de paquets de boucles (16), chaque paquet de boucles (16) embrassant respectivement deux douilles (14) voisines, et
- une enveloppe (12) ayant l'élasticité du caoutchouc, dans laquelle les paquets de boucles (16) et les douilles (14) sont au moins partiellement noyés,
un collier (18, 20, 22, 24 ; 218, 224) étant prévu sur au moins une partie terminale d'au moins une des douilles (14) pour le soutien axial d'un paquet de boucles (16) adjacent, lequel collier est noyé au moins partiellement dans l'enveloppe (12), a l'élasticité du caoutchouc, entoure la douille (14) et présente, vu dans une coupe contenant l'axe, une section en forme de U constituée par deux bras longitudinaux (30, 32) et un bras transversal (34),
**caractérisé en ce que** le collier est en contact avec la douille (14) par l'intermédiaire d'un bras longitudinal (30, 32).

2. Corps articulé (10) selon la revendication 1,
**caractérisé en ce que** la section en U du collier (18, 20, 22, 24 ; 218, 224) s'ouvre vers l'extérieur dans la direction de l'axe.

3. Corps articulé (10) selon la revendication 1 ou 2,
**caractérisé en ce que** le bras longitudinal (32) éloigné de la douille (14) est incliné selon un angle prédéfini par rapport à l'axe de la douille.

4. Corps articulé (10) selon la revendication 3,
**caractérisé en ce que** l'angle se situe dans une plage comprise entre 2 et 20°, de préférence entre 5 et 15°.

5. Corps articulé (10) selon l'une des revendications précédentes,
**caractérisé en ce que** le collier (18, 20, 22, 24) se présente sous la forme d'un composant distinct et est pressé ou enclenché sur la douille (14).

6. Corps articulé (10) selon la revendication 5,
**caractérisé en ce que** le bras longitudinal (30) en contact avec la douille (14) est,
dans la direction axiale, réalisé plus court que le bras longitudinal (32) éloigné de la douille (14).

7. Corps articulé (210) selon l'une des revendications précédentes,
**caractérisé en ce qu'**un collier (218, 224) est intégralement formé sur une extrémité de la douille (214), la partie terminale de la douille (214) formant un bras longitudinal (230, 236) intégralement relié à un bras transversal (232, 238) qui est en revanche intégralement relié à un bras longitudinal (234, 240) éloigné de la douille (214).

8. Corps articulé (210) selon la revendication 7,
**caractérisé en ce qu'**un collier (220, 222) est monté en tant que composant distinct sur l'autre partie terminale de la douille (214).

9. Corps articulé (10) selon l'une des revendications précédentes,
**caractérisé en ce que** l'enveloppe (12) ayant l'élasticité du caoutchouc entoure le collier (18, 20, 22, 24) dans la partie de son bras longitudinal (32) éloigné de la douille (14) et jusqu'à son bord axialement extérieur, une surface circonférentielle axialement extérieure du bras longitudinal (32) éloigné de la douille (14) se terminant pour l'essentiel en affleurement avec la surface (26, 28) de l'enveloppe élastique (12).

10. Corps articulé (10) selon l'une des revendications précédentes,
**caractérisé en ce que** le collier (18, 20, 22, 24) forme conjointement avec l'enveloppe (12) ayant l'élasticité du caoutchouc une étanchéité souple.

11. Corps articulé (10) selon l'une des revendications précédentes,
**caractérisé en ce que** des collerettes (446, 448, 450, 452) ou des rondelles (342, 344) sont prévues entre deux composants de collier (318, 320, 322, 324 ; 418, 420, 422, 424) disposés respectivement sur les parties terminales d'une douille (214 ; 410) pour le soutien axial des différents paquets de boucles intercalés.

12. Corps articulé (10) selon l'une des revendications précédentes,
**caractérisé en ce qu'**une barrette transversale (37) est prévue sur le bras longitudinal (32) éloigné de la douille (14).

13. Corps articulé (10) selon l'une des revendications précédentes,
**caractérisé en ce que** le bras longitudinal (632) éloigné de la douille (614) est entouré par l'enveloppe (612) ayant l'élasticité du caoutchouc.

14. Corps articulé (10) selon l'une des revendications précédentes,
**caractérisé en ce que** le collier (18, 20, 22, 24) est fabriqué à partir de métal ou de matière synthétique.

15. Corps articulé (10) selon l'une des revendications précédentes,
**caractérisé en ce que** l'enveloppe (12) ayant l'élasticité du caoutchouc est reliée au moins par endroits au collier (18, 20, 22, 24).

16. Agencement d'arbres pourvu d'un corps articulé (10) selon l'une des revendications 1 à 15.
